# EUROPÄISCHE PATENTANMELDUNG

(11) **EP 0 533 002 A1**
(43) Veröffentlichungstag der Anmeldung: **24.03.1993**
(21) Anmeldenummer: 92115214.6
(22) Anmeldetag: 05.09.1992
(51) Int. Cl.: G11B 23/087

(54) **Kassette für einen Recorder**

(30) Priorität: 19.09.1991 DE 4131173; 29.10.1991 DE 4135559; 10.01.1992 DE 4200437
(71) Anmelder: DEUTSCHE THOMSON-BRANDT GMBH, D-78048 Villingen-Schwenningen (DE)
(72) Erfinder: Weisser, Fritz, W-7742 St. Georgen (DE)

(57) **Zusammenfassung**

Kassetten für VHS-Recorder haben eine schwenkbare Klappe, die in einer ersten Stellung das Kassettengehäuse verschließt und in einer zweiten Stellung das Magnetband freigibt. Aufgabe ist es, eine neuartige Konstruktion dafür zu schaffen, die einfach und platzsparend ist und insbesondere eine Adaption der kleinen C-Kassette an einen üblichen Heimvideorecorder ermöglicht.

Die Wickelteller (4, 5) sind von sichelförmigen, schwenkbaren Bandschutzklappen (6, 7) umgeben, deren Enden in einer ersten Stellung (Fig. 1) zusammenstoßen und in einer zweiten Stellung (Fig. 2) voneinander entfernt sind.

Insbesondere für einen digitalen Videorecorder mit Anpassung an Kamerabetrieb und Heimrecorderbetrieb

## Beschreibung

Die Erfindung geht aus von einer Kassette für einen Recorder gemäß dem Oberbegriff des Anspruchs 1. Eine derartige Kassette ist bekannt durch die DE-PS 26 56 199.

Der Erfindung liegt die Aufgabe zugrunde, eine neuartige, raumsparende und konstruktiv einfache Kassettenkonstruktion dieser Art zu schaffen, die insbesondere zusätzlich eine Adaption der Kassette an Geräte mit unterschiedlichem Abstand der Wickelteller ermöglicht.

Diese Aufgabe wird durch die im Anspruch 1 angegebene Erfindung gelöst. Vorteilhafte Weiterbildungen der Erfindung sind in den Unteransprüchen angegeben.

Bei der Erfindung wird also von der bisherigen Lösung abgewichen, bei der am Kassettengehäuse eine sich über die gesamte Länge erstreckende und um die lange Kante der Kassette schwenkbare Klappe angeordnet ist. Stattdessen sind die Wickelteller von sichelförmigen, am Ende offenen und um die Drehachse der Wickelteller schwenkbaren Bandschutzklappen umgeben, deren Enden in der ersten Stellung zusammenstoßen, die Kassette verschließen und eine Berührung des Magnetbandes verhindern und in der zweiten Stellung voneinander entfernt sind und das Magnetband für die Abtastung freigeben. Ein konstruktiver Vorteil besteht darin, daß die Bandschutzklappen im Gegensatz zu der schwenkbaren Klappe nicht nach oben über die Begrenzungsfläche des Kassettengehäuses hinausragen, sondern in der Ebene der Kassette verbleiben. Dadurch ergeben sich Vorteile bei der Raumausnutzung des Recorders.

Gemäß einer Weiterbildung der Erfindung sind die Bandschutzklappen über die geöffnete Stellung hinaus weiter schwenkbar, und zwar derart, daß dabei der Abstand der Wickelteller erhöht wird. Die Bandschutzklappen haben dann in vorteilhafter Weise eine Doppelfunktion. Im ersten Teil der Schwenkbewegung geben sie das Magnetband für die Abtastung frei. In einer darüberhinausgehenden zweiten Schwenkbewegung bewirken sie zusätzlich die Vergrößerung des Abstandes der beiden Wickelteller, um z.B. eine für einen Camcorder vorgesehene sogenannte C-Kassette an einen üblichen Heimvideorecorder mit größerem Abstand der Wickeldorne anzupassen. Die Erfindung ist besonders geeignet als neuartige Kassette für einen digitalen Videorecorder.

Die Erfindung wir im folgenden anhand der Zeichnung erläutert. Darin zeigen
- Fig. 1: die erfindungsgemäße Kassette im geschlossenen Zustand,
- Fig. 2: die Kassette im geöffneten Zustand,
- Fig. 3: die erweiterte Schwenkbewegung zur Vergrößerung des Abstandes der Wickelteller,
- Fig. 4: einen Schnitt durch Fig. 1,
- Fig. 5: einen Schnitt durch Fig. 2,
- Fig. 6, 7: eine Weiterbildung der Kassette gemäß Fig. 1-3,
- Fig. 8-11: eine konstruktive Lösung zum automatischen Aufwickeln des Bandes,
- Fig. 12-14: eine Kassette mit einem eingebauten Speicher für Kennwerte und
- Fig. 15: eine Kassette mit einem Speicher für Kennwerte und
- Fig. 16: die Lagerung der Kassette an dem Recorder.

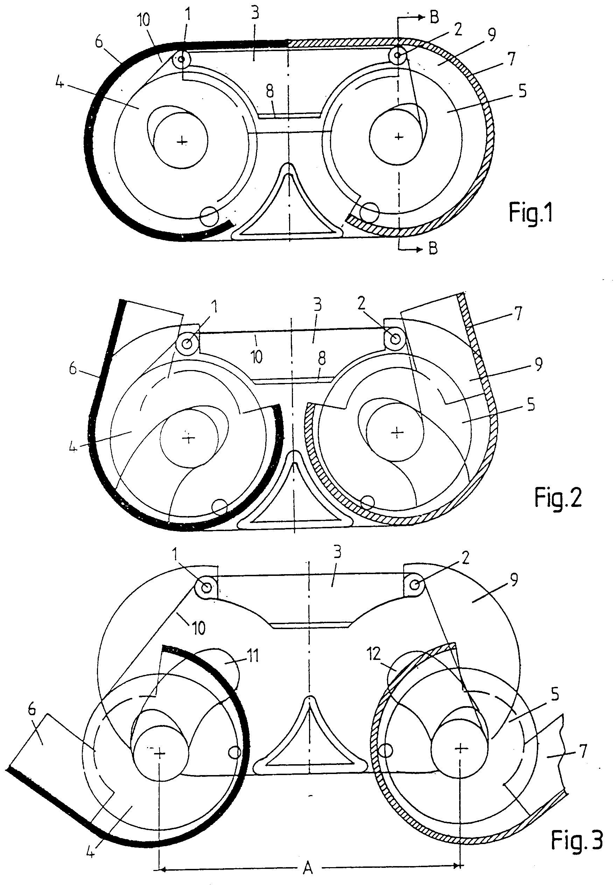

Fig. 1 zeigt ein Kassettengehäuse 9 mit zwei Fixierbohrungen 1, 2, in die am Recorderchassis angeordnete Stifte zur Fixierung der Lage der Kassette eingreifen. Zwischen den Bohrungen 1, 2 ist ein Freiraum 3 für die im Abspielbetrieb eingreifenden Bandführungselemente vorgesehen. Das Kassettengehäuse 9 enthält zwei Wickelteller 4, 5, auf die das Magnetband 10 aufgewickelt ist. Die Wickelteller 4, 5 sind über einen Teil ihres Umfangs von zwei sichelförmigen, um die Drehachsen der Wickelteller 4, 5 schwenkbaren Bandschutzklappen 6, 7 eingefaßt. Die Enden der Bandschutzklappen 6, 7 stoßen im Bereich des Freiraums 3 zusammen, so daß die Kassette verschlossen und das Band 10 gegen Berührung geschützt ist. Das Gehäuse 9 trägt außerdem die übliche Kassettencodierung 8 über Bandsorte, Löschschutz und dgl., die vom Recorder mechanisch abgetastet wird.

In Fig. 2 sind die beiden sichelförmigen Bandschutzklappen 6, 7 symmetrisch in entgegengesetzter Richtung ausgeschwenkt, so daß jetzt ihre in Fig. 1 zusammenstoßenden Enden voneinader entfernt sind. Dadurch wird der Freiraum 3 für die Bandführungselemente und die Bandabtastelemente zugänglich. Die Wickelteller 4, 5 können drehbar, aber quer zur Drehachse unverschiebbar in den Bandschutzklappen 6, 7 gelagert sein. Die Wickelteller 4, 5 einerseits und die Bandschutzklappen 6, 7 andererseits können auch unabhängig voneinander an dem Kassettengehäuse 9 gelagert sein.

Diese Lösung ist sowohl für kleine, sogenannte C-Kassetten für Camcorder als auch für große Kassetten für Heimvideorecorder anwendbar.

In Fig. 3 sind die Bandschutzklappen 6, 7 über die Lage gemäß Fig. 2 hinaus weiter ausgeschwenkt. Bei dieser Schwenkbewegung bewegen sich die Bandschutzklappen 6, 7 in teilkreisförmigen Langlöchern 11, 12 am Gehäuse 9 derart, daß der Abstand A zwischen den Achsen der Wickelteller 4, 5 erhöht wird. Der Abstand A entspricht dann dem Wickeltellerabstand bei einem Heimvideorecorder. Die derart geänderte Kassette kann dann in einem Heimvideorecorder abgespielt werden. Vorteilhaft dabei ist, daß eine kleine C-Kassette für einen Camcorder mit dem Aufbau gemäß Fig. 1, 2 ohne Änderung der Kassettengröße in einem Heimvideorecorder abgespielt werden kann. Die Kassette selbst behält dann ihre geringe Größe gemäß Fig. 1, 2 für einen Camcorder und ändert beim Einlegen in einen Heimvideorecorder selbsttätig ihre Größe gemäß Fig. 3. Bisher benötigte Adapter zum Abspielen einer kleinen C-Kassette in einem Heimvideorecorder sind dann nicht mehr erforderlich.

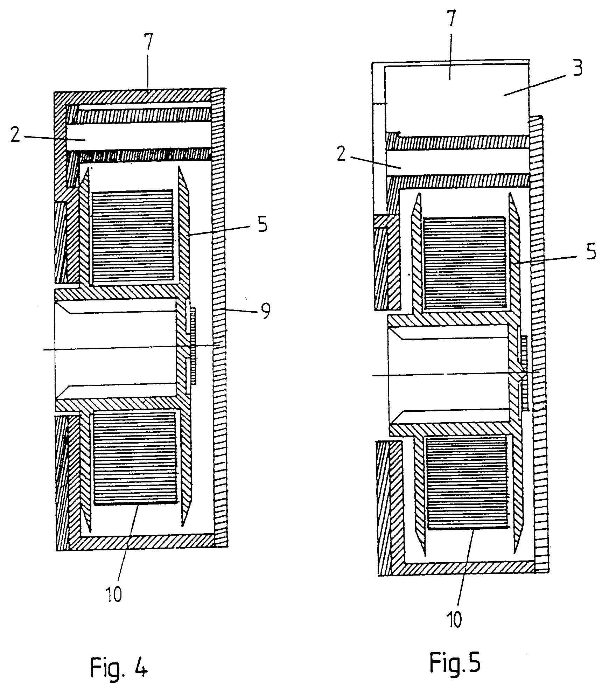

Fig. 4 zeigt einen Schnitt entlang der Linie B-B in Fig. 1. Der Wickelteller 5 mit dem Magnetband 10 ist in dieser Stellung durch die Bandschutzklappe 7 umgeben. Das Kassettengehäuse ist somit geschlossen und das Magnetband 10 gegen Berührung gesichert. Entsprechendes gilt für den Wickelteller 4 und die Bandschutzklappe 6.

Fig. 5 zeigt den geöffneten Zustand gemäß Fig. 2. Die Bandschutzklappe 7 ist jetzt gemäß Fig. 2 ausgeschwenkt, so daß das Magnetband 10 über den Freiraum 3 für die Bandführungselemente und die Abtastköpfe zugänglich ist.

Die beschriebene Schwenkbewegung der Bandschutzklappen 6, 7 wird nach dem Einlegen der Kassette in den Recorder selbsttätig ausgelöst. Vorzugsweise ist der Recorder mit einem elektromotorisch betriebenen Zahnradantrieb versehen, der jeweils in einen Zahnkranz am äußeren Rand der Bandschutzklappen 6, 7 eingreift. Diese Steuerung der Bandschutzklappen 6, 7 kann von einem Elektromotor grundsätzlich über formschlüssige oder kraftschlüssige Antriebsmittel erfolgen.

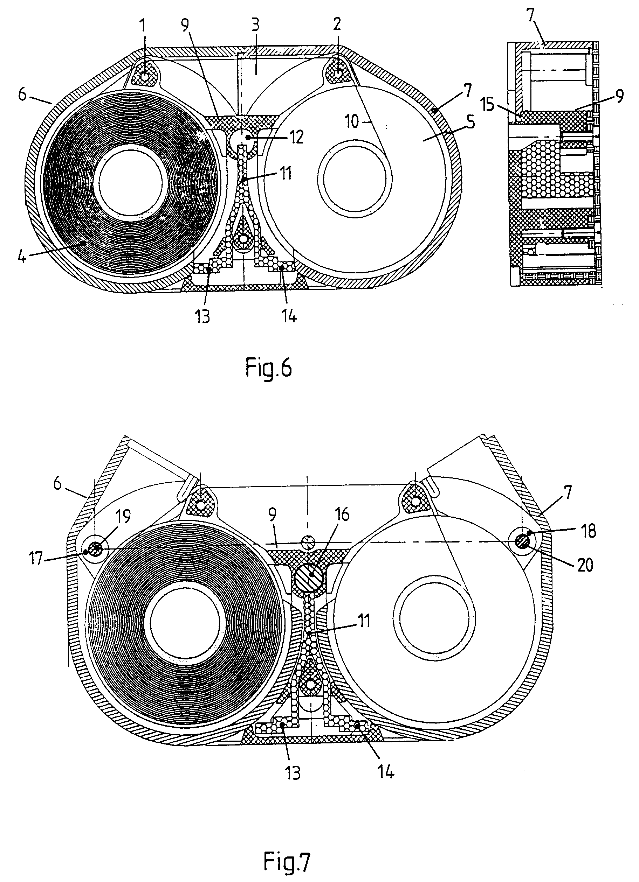

In Fig. 6 ist zwischen den beiden Wickeltellern 4, 5 in dem Kassettengehäuse 9 der Sperrschieber 11 gelagert, der in einer Translationsbewegung quer zur Laufrichtung des Magnetbandes 10 verschiebbar ist. In der Ruhestellung gemäß Fig. 6 liegt das obere Ende des Sperrschiebers 11 im Bereich der Öffnung 12 im Gehäuse 9. In dieser Stellung liegen zwei Ausleger 13, 14 am unteren Ende des Sperrschiebers 11 an den einander zugewandten Kanten der Bandschutzklappen 6, 7 an. Dadurch wird ein Öffnen der Bandschutzklappen 6, 7 in die Stellungen gemäß Fig. 2 oder 3 verhindert. Zwischen den Bandschutzklappen 6, 7 und dem Gehäuse 9 sind außerdem federnde, formschlüssige Verrastungen 15 vorgesehen. Dadurch wird ein unbeabsichtigtes Öffnen der Bandschutzklappen 6, 7 zusätzlich erschwert oder verhindert.

In Fig. 7 ist die Kassette in einen Recorder eingelegt. Der Stift 16 am Recorderchassis greift jetzt in die Öffnung 12 des Gehäuses 9 ein und verschiebt den Sperrschieber 11 entgegen einer Federkraft nach unten, so daß die Ausleger 13, 14 von den Kanten der Bandschutzklappen 6, 7 freikommen und deren Schwenkbewegung in die Stellungen gemäß Fig. 2, 3, 7 ermöglichen. Die Bandschutzklappen 6, 7 enthalten außerdem zwei Löcher 17, 18, in die am Recorderchassis vorgesehene Bandendsensoren 19, 20 eingreifen. Die Bandendsensoren bestehen vorzugsweise aus einer Lichtschranke mit einer Leuchtdiode und einer Fotozelle, die bei den transparenten Bandabschnitten am Anfang und am Ende des Bandes ansprechen. Wenn die Kassette aus dem Recorder herausgenommen wird, gelangt der Sperrschieber 11 durch Federkraft selbsttätig wieder in die Stellung gemäß Fig. 6, so daß ein Öffnen der Kassette durch Schwenken der Bandschutzklappen 6, 7 verhindert ist. Beim Öffnen der Bandschutzklappen 6, 7 in die erweiterte Stellung gemäß Fig. 3 wird zwangsläufig zusätzlich Band 10 abgewickelt. Beim Zurückschwenken in die Stellung gemäß Fig. 1 oder 2 muß daher zur Vermeidung einer Schlaufe wieder ein Bandabschnitt aufgewickelt werden.

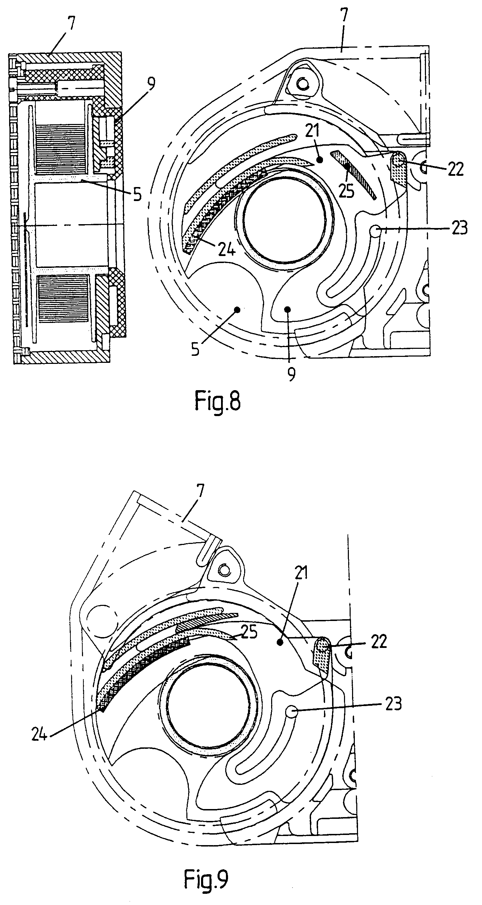

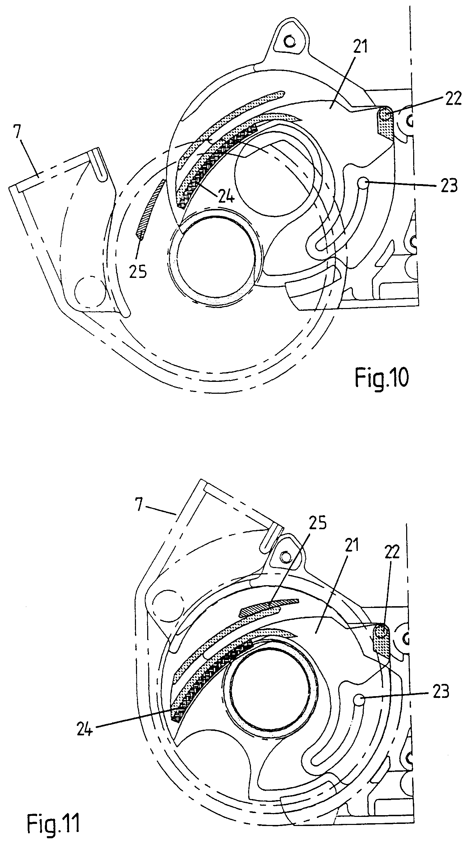

Die Figuren 8 - 11 zeigen eine konstruktive Lösung, durch die das zusätzlich abgewickelte Band beim Schließen der Bandschutzklappen 6, 7 selbsttätig wieder aufgewickelt wird. Der Bremshebel 21 ist an dem Kassettengehäuse 9 um den Drehpunkt 22 drehbar gelagert. Das Federende 23 des Bremshebels 21 ist ebenfalls an dem Gehäuse 9 eingehängt, wodurch der Bremsbelag 24 am unteren Teil des Wickeltellers 5 anliegt und den Wickelteller 5 bei geschlossener Kassette bremst. Beim Öffnen der Bandschutzklappe 6, 7 in die Stellung gemäß Fig. 2, 3, 7 wird durch die Nase 25 der Bremshebel 21 angehoben in die Stellung gemäß Fig. 9. Der Wickelteller 5 ist dann nicht mehr gebremst, was der Stellung mit engem Abstand der Wickelteller 4, 5 gemäß Fig. 1 oder 6 für einen Camcorder entspricht. Nach dem weiteren Ausschwenken der Bandschutzklappen 6, 7 in die Stellung gemäß Fig. 3 für Betrieb in einem Heimgerät mit größerem Abstand der Wickelteller fällt der Bremshebel 21 zurück in die Stellung gemäß Fig. 10. Beim Einschwenken der Bandschutzklappen 6, 7 in die enge Stellung gemäß Fig. 6 wälzt sich der Wickelteller 5 an dem Bremsbelag 24 des Bremshebels 21 und wickelt somit das Band 10 in die Stellung gemaß Fig. 11 auf.

Eine Variante zu Fig. 8 - 11 arbeitet folgendermaßen:
Der Bremshebel hat zwischen den Stellungen gemäß Fig. 1 und 2 keine Bedeutung und wird auch nicht mitgenommen. Beim Ausschwenken in die expandierte Stellung gemäß Fig. 3 wird jeweils der an dem Kassettengehäuse 9 beweglich gelagerte Bremshebel durch die zugeordnete Bandschutzklappe mitgenommen. In der endgültigen expandierten Stellung gemäß Fig. 3 rastet der Bremshebel durch eine formschlüssige Rastverbindung an dem Kassettengehäuse 9 ein. Gleichzeitig gelangt ein Ende des Bremshebels über den Bremsbelag in Reibkontakt mit dem das Band tragenden Wickelteller. Wenn jetzt die Bandschutzklappe aus der Stellung gemäß Fig. 3 in die Stellung gemaß Fig. 2 oder 1 zurückgeschwenkt wird, bleibt diese Rastverbindung zunächst bestehen. Der Wickelteller wird also an der Stelle des Umfanges gewissermaßen am Kassettengehäuse 9 festgehalten. Da sich jedoch der Drehpunkt des Wickeltellers 4 oder 5 beim Zurückschwenken verschiebt, wird zwangsläufig der Wickelteller 4 oder 5 durch den Reibbelag um seinen Mittelpunkt gedreht. Durch diese Drehbewegung wird das beim Ausschwenken von Fig. 2 in Fig. 3 abgewickelte Band in erwünschter Weise wieder aufgewickelt, damit beim Zurückschwenken keine Bandschlaufe entsteht. Die Schwenkbewegung der Bandschutzklappen 6, 7 von der Stellung gemäß Fig. 3 in die Stellung gemäß Fig. 2 oder 1 wird also zusätzlich ausgenutzt, um die Drehbewegung des Wickeltellers 4 oder 5 zum Aufwickeln des Bandabschnittes zu gewährleisten, der bei der Schwenkbewegung von Fig. 2 in Fig. 3 zwangsläufig zusätzlich abgewickelt wird.

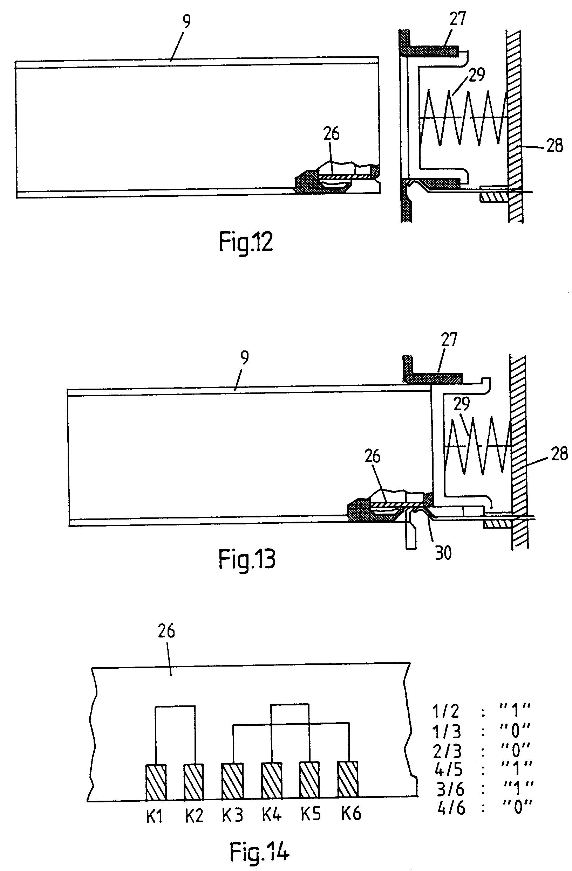

Fig. 12 - 14 zeigen eine Weiterbildung der Kassette zur Identifizierung von Kennwerten der Kassette. An dem Kassettengehäuse 9 ist die gedruckte Leiterplatte 26 angeordnet, die eine Vielzahl von Anschlüssen aufweist. Die einzelnen Anschlüsse sind zur Realisierung eines binären Codes entweder miteinander verbunden oder nicht miteinander verbunden. Beim Einschieben der Kassette in den Recorder wird der am Recorderchassis 28 angeordnete Schieber 27 entgegen der Kraft der Feder 29 verschoben. In der Endstellung gemäß Fig. 13 gelangt der am Recorderchassis 28 angeordnete Kontaktfedersatz 30 in elektrischen Kontakt mit den Anschlüssen der Leiterbahnen der Leiterplatte 26. Eine an den Federsatz 30 angeschlossene Auswertschaltung erkennt jetzt durch Auswertung des auf der Leiterplatte 26 enthaltenden binären Codes Kennwerte und steuert dementsprechend verschiedene mechanische oder elektrische Funktionen des Recorders.

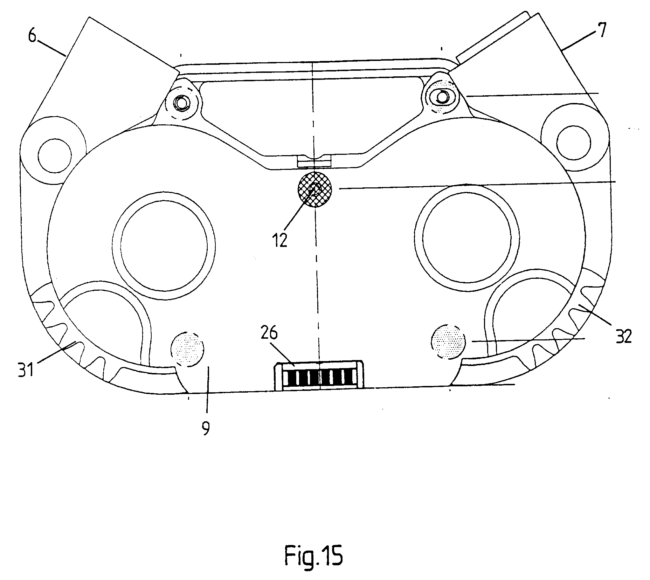

Fig. 14 zeigt die Leiterplatte 26 mit den Kontakten K1 - K6, die entsprechen einem Code mit einander verbunden oder nicht miteinander verbunden sind. Bei der Abfrage der Kontakte ergeben z.B. die verbundenen Kontakte K1, K2 den binären Wert "1" und die nicht miteinander verbundenen Kontakte K2, K3 den binären Wert "0". Ein spezieller Kontakt dient dabei als Aufnahmesperre. Wenn z.B. erkannt wird, daß der Kontakt K6 mit dem Kontakt K3 verbunden ist, wird eine Aufnahme mechanisch oder elektrisch verhindert. Durch Abdecken des Kontaktes K6 mit einer Folie oder einem an dem Kassettengehäuse angeordneten Schieber kann die Aufnahmesperre im Bedarfsfalle aufgehoben werden. Die Leiterplatte 26 befindet sich vorzugsweise an der Unterseite des Kassettengehäuses 9. Die Leiterplatte 26 kann auch zusätzlich einen Halbleiterspeicher enthalten, in dem eine Vielzahl von Kennwerten der Kassette, z.B. über Bandsorte, Bandlänge, Aufzeichnungsart der Signale usw. gespeichert ist. Diese Informationen können, sobald die Kassette mit dem Recorder kontaktiert wird, auf einem Display angezeigt werden, z.B:
1. Kassette befindet sich in offener Schublade des Recorders.
2. Kassette ist in einen vorgesehenen Schlitz des Recorders oder der Fernbedienung eingesteckt.
3. Mehrere Kassetten in einem Ständer.

Die Leiterplatte 26 und das Kassettengehäuse 9 können mit einer formschlüssigen Rastverbindung versehen sein. Dann kann im Bedarfsfalle auf ein Kassettengehäuse 9 nachträglich eine Leiterplatte 26 aufgesteckt werden. Dadurch ist eine Umrüstung der Kassette in eine Kassette mit einem derartigen Speicher möglich.

Gemäß Fig. 15 ist die die Kennwerte enthaltende Leiterplatte 26 am unteren hinteren Teil des Gehäuses 9 angebracht. Das Gehäuse 9 enthält wieder die Öffnung 12, in die beim Einlegen in den Recorder der am Recorderchassis vorgesehene Stift 16 eingreift und das Öffnen der Kassette ermöglicht. Die Bandschutzklappen 6, 7 sind an ihrem äußeren Umfang mit Zahnkränzen 31, 32 versehen, in die zum Öffnen der Bandschutzklappen 6, 7 jeweils ein Zahnantrieb am Recorderchassis eingreift.

Einer Weiterbildung der Erfindung liegt die Aufgabe zugrunde, die Lagerung der Bandspule an dem Wickelteller zu verbessern und außerdem eine an den Recorder angepaßte neuartige Kassette mit besserer Raumsausnutzung zu schaffen. Bei einem derartigen Kassettenrecorder wird von der bisher fast ausschließlich angewendeten Lösung, daß die den Bandwickel aufnehmende Bandspule auf dem Wickelteller aufliegt, abgewichen. Stattdessen wird die Bandspule an der Oberkante des Mitnehmers aufgehängt, während die Unterkante der Bandspule einen geringen Abstand von dem Wickelteller aufweist, also auf diesem nicht mehr aufliegt. Durch diese hängende Anordnung der Bandspule an dem Mitnehmer werden ein geringerer Taumelschlag und ein geringerer Höhenschlag der Bandspule erreicht. Das beruht im wesentlichen darauf, daß nunmehr der Schwerpunkt der Bandspule nicht mehr oberhalb, sondern unterhalb der Auflageebene liegt. Die Lagerung der Bandspule an dem Wickelteller wird insgesamt stabiler.

Eine derartige Kassette hat nicht mehr wie bisher ein im wesentlichen rechteckförmiges Gehäuse. Vielmehr ist das Kassettengehäuse abgerundet und der runden Form der Bandspule und des Bandwickels angepaßt. Der bisher verschenkte Raum an den Ecken zwischen der runden Bandspule und dem rechteckförmigen Kassettengehäuse kann somit zusätzlich ausgenutzt werden. Das ist besonders vorteilhaft bei Recordern mit gedrängtem Aufbau wie Camcordern.

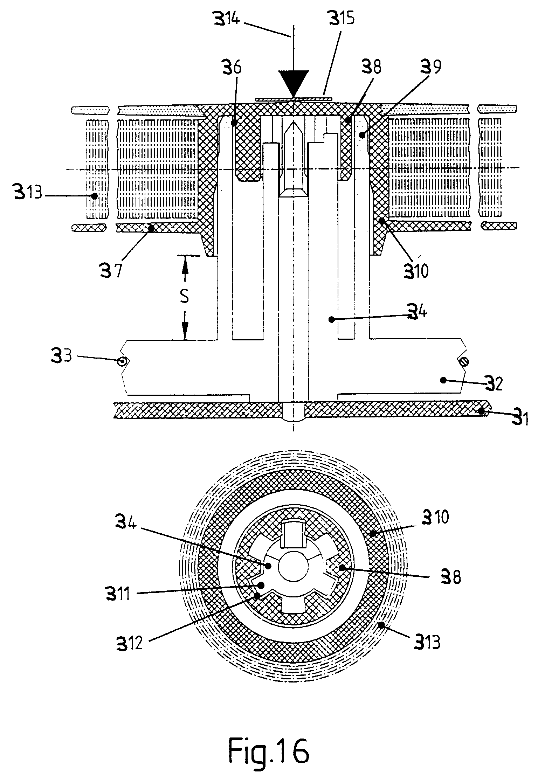

In Fig. 16 ist auf dem Recorderchassis 31 der Wickelteller 32 drehbar gelagert, der von dem Antriebsriemen 33 angetrieben wird und den Mitnehmer 34 aufweist. Der Mitnehmer 34 enthält an seiner Oberkante einen umlaufenden Steg 39. Die das Magnetband 313 aufnehmende Bandspule 37 ist auf den Mitnehmer 34 aufgesetzt, indem der umlaufende Steg 39 am Mitnehmer 34 in eine umlaufende Ausnehmung 36 an der Bandspule 37 eingreift. Die Bandspule 37 stützt sich dadurch auf der Oberkante des umlaufenden Steges 39 ab, während zwischen der Unterkante der Bandspule 37 und der Oberkante des Wickeltellers 32 ein Spiel S verbleibt. Das Spiel S ist vergrößert dargestellt und beträgt in der Praxis nur 0,3 bis 0,5 mm. Zwischen der zentralen Nabe 310 der Bandspule 37 und dem Mitnehmer 34 erfolgt eine formschlüssige Kupplung, wobei zwischen diesen Teilen eine relativ enge Passung gewährleistet ist. Der formschlüssige Antrieb erfolgt dadurch, daß radial gerichtete Nasen 311 am Mitnehmer 34 in entsprechende Ausnehmungen 312 an der Nabe 310 eingreifen. Die Bandspule 37 wird, wie symbolisch durch den Pfeil 314 angedeutet, durch ein Andruckmittel 315 auf dem Mitnehmer 34 gehalten, was insbesondere für transportable Geräte wie Camcorder notwendig ist. Die Bandspule 37 liegt also nicht mehr mit ihrer Unterkante auf der Oberkante des Wickeltellers 32 auf, sondern stützt sich nur auf der Oberkante des Mitnehmers 34 ab.

## Patentansprüche

1. Kassette für einen Videorecorder mit einem Gehäuse (9), das zwei das Magnetband (10) tragende, um senkrecht zur Gehäuseebene stehende Drehachsen drehbare Wikkelteller (4, 5) und ein schwenkbares Teil aufweist, das in einer ersten Stellung das Gehäuse verschließt und in einer zweiten Stellung das Magnetband (10) für den Abtastvorgang freigibt, **dadurch gekennzeichnet**, daß die Wickelteller (4, 5) über einen Teil ihres Umfangs von sichelförmigen, am Ende offenen und um die Drehachsen schwenkbaren Bandschutzklappen (6, 7) umgeben sind, deren Enden in der ersten Stellung zusammenstoßen (Fig. 1) und die Kassette verschließen und in der zweiten Stellung (Fig. 2) voneinander entfernt sind und das Magnetband (10) freigeben.

2. Kassette nach Anspruch 1, **dadurch gekennzeichnet**, daß die Wickelteller (4, 5) drehbar, aber quer zur Drehachse unverschiebbar in den Bandschutzklappen (6, 7) gelagert sind.

3. Kassette nach Anspruch 1, **dadurch gekennzeichnet**, daß die Bandschutzklappen (6, 7) mit einem Zahnkranz versehen sind, in den ein am Recorderchassis vorgesehener elektromotorischer Zahnradantrieb eingreift.

4. Kassette nach Anspruch 1, **dadurch gekennzeichnet**, daß die Bandschutzklappen (6, 7) symmetrisch in entgegengesetzte Richtungen schwenkbar am Kassettengehäuse (9) gelagert sind.

5. Kassette nach Anspruch 1, **dadurch gekennzeichnet**, daß die Bandschutzklappen (6, 7) so am Gehäuse (9) gelagert sind, daß sie über die geöffnete Stellung (Fig. 2) hinaus derart in eine expandierte Stellung weiter schwenkbar sind, daß dabei der Abstand (A) zwischen den beiden Wickeltellern (4, 5) erhöht wird (Fig. 3).

6. Kassette nach Anspruch 1, **dadurch gekennzeichnet**, daß die Wickelteller (4, 5) und die Bandschutzklappen (6, 7) auf Trägerplatten gelagert sind, die in teilkreisförmigen Öffnungen (11, 12) am Kassettengehäuse (9) verschiebbar gelagert sind.

7. Recorder für eine Kassette nach Anspruch 1, **dadurch gekennzeichnet**, daß am Recordergehäuse elektromotorische Antriebsmittel vorgesehen sind, die auf die Bandschutzklappen einwirken.

8. Recorder nach Anspruch 7, **dadurch gekennzeichnet**, daß am Recorderchassis ein elektromotorisch betätigter Zahnradantrieb vorgesehen ist, der in Zahnkränze an den Bandschutzklappen (6, 7) eingreift.

9. Kassette nach Anspruch 1, **dadurch gekennzeichnet**, daß zwischen den Wickeltellern (4, 5) ein quer zur Bandlaufrichtung translatorisch verschiebbarer Sperrschieber (11) gelagert ist, dessen eines Ende im Bereich einer Öffnung (12) im Kassettengehäuse (9) liegt und dessen anderes Ende zwei Ausleger (13, 14) aufweist, die im Ruhezustand an Kanten der Bandschutzklappen (6, 7) anliegen und deren Schwenkbewegung verhindern (Fig. 6).

10. Kassette nach Anspruch 9, **dadurch gekennzeichnet** , daß der Sperrschieber (11) durch Federkraft in der Ruhestellung gehalten und durch einen am Recorderchassis angeordneten, in die Öffnung (12) eingreifenden Stift (16) so verschiebbar ist, daß die Ausleger (13, 14) von den Kanten der Bandschutzklappen (6, 7) freikommen (Fig, 7).

11. Kassette nach Anspruch 1, **dadurch gekennzeichnet**, daß zwischen den Bandschutzklappen (6, 7) und dem Kassettengehäuse (9) eine federnde, formschlüssige Verrastung (15) vorgesehen ist, die ein unbeabsichtigtes Öffnen der Bandschutzklappen (6, 7) erschwert oder verhindert (Fig. 6).

12. Kassette nach Anspruch 1, **dadurch gekennzeichnet**, daß die Bandschutzklappen (6, 7) mit Öffnungen (17, 18) zum Eingreifen von Bandendensensoren (19, 20) versehen sind (Fig. 7).

13. Kassette nach Anspruch 1, **dadurch gekennzeichnet**, daß am Kassettengehäuse (9) eine gedruckte Leiterplatte (26) angeordnet ist, deren Anschlüsse (K1-K6) durch einen Kontaktfedersatz (30) am Recorder kontaktierbar sind und durch ihre Verdrahtung über Leiterbahnen Kennwerte der Kassette darstellen (Fig. 12 - 14).

14. Kassette nach Anspruch 13, **dadurch gekennzeichnet**, daß ein Anschluß (K6) der Leiterplatte (26) als Aufnahmesperre ausgebildet ist.

15. Kassette nach Anspruch 14, **dadurch gekennzeichnet**, daß der Anschluß (K6) gegen elektrische Kontaktierung abdeckbar ist.

16. Kassette nach Anspruch 13, **dadurch gekennzeichnet**, daß auf der Leiterplatte (26) ein Halbleiter-Speicher angeordnet ist.

17. Kassette nach Anspruch 12, **dadurch gekennzeichnet**, daß die Leiterplatte (26) über eine formschlüssige Rastverbindung nachträglich an dem Kassettengehäuse (9) anbringbar ist.

18. Kassette nach Anspruch 5, **dadurch gekennzeichnet**, daß an den Bandschutzklappen (6, 7) Mittel vorgesehen sind, die beim Zurückschwenken aus der expandierten Stellung selbsttätig ein Aufwickeln eines Abschnittes des Magnetbandes (10) bewirken (Fig. 8 - 11).

19. Kassette nach Anspruch 18, **dadurch gekennzeichnet**, daß jeweils im Bereich einer Bandschutzklappe (6, 7) an dem Kassettengehäuse (9) ein Hilfsteil (21) beweglich gelagert ist, das beim Ausschwenken in die expandierte Stellung von der Bandschutzklappe (6, 7) mitgenommen wird und in der expandierten Stellung am Kassettengehäuse (9) einrastet und mit einem Reibbelag an dem das Magnetband (10) tragenden Wickelteller (4, 5) anliegt (Fig. 8 - 11).

20. Recorder für eine Kassette nach Anspruch 1 mit Wickeltellern (32) mit je einem Mitnehmer (34), der in eine Öffnung der das Magnetband (313) tragenden Bandspule (37) eingreift, **dadurch gekennzeichnet**, daß der Mitnehmer 34) und die Bandspule (37) so ausgebildet sind, daß die Bandspule (37) sich an der Oberkante des Mitnehmers (34) abstützt (Fig. 16).

21. Recorder nach Anspruch 20, **dadurch gekennzeichnet**, daß am Recorderchassis (31) konische Führungsstifte angeordnet sind, die in Bohrungen des Kassettengehäuses (320) eingreifen (Fig. 16).

22. Recorder nach Anspruch 20, **dadurch gekennzeichnet**, daß die Nabe (310) der Bandspule (37) an der oberen Seite mit einer umlaufenden, nach unten offenen Ausnehmung (36) versehen ist, in die ein umlaufender Steg (39) am Mitnehmer (34) eingreift (Fig. 16).
